# FASCICULE DE BREVET EUROPEEN

(11) **EP 0 401 066 B1**
(45) Date de publication et mention de la délivrance du brevet: **20.10.1993**
(21) Numéro de dépôt: 90401214.3
(22) Date de dépôt: 07.05.1990
(51) Int. Cl.: H01S 3/09, H05H 7/04

(54) **Dispositif d'onduleur hélicoîdal à aimants permanents pour application aux lasers à électrons libres**
Helikoidaler Wiggler mit Permanentmagneten für Freie-Elektronen-Laser
Permanent magnet helical wiggler for free-electron lasers

(30) Priorité: 30.05.1989 FR 8907082
(43) Date de publication de la demande: 05.12.1990
(73) Titulaire: THOMSON TUBES ELECTRONIQUES, 92100 Boulogne-Billancourt (FR)
(72) Inventeur: Hartemann, Frederic, F-92045 Paris la Défense (FR); Bres, Michel, F-92045 Paris la Défense (FR); Teillard, Roger, F-92045 Paris la Défense (FR)
(74) Mandataire: Guérin, Michel

(56) Documents cités:
- US-A- 4 283 687
- IEEE JOURNAL OF QUANTUM ELECTRONICS, vol. 24, no. 5, mai 1988, pages 812-819, IEEE, New York, US; J. ASHKENAZY et al.: "Analysis and measurements of permanent magnet "bifilar" helical wigglers"
- APPL. PHYS. LETT., vol. 53, no. 8, 22 août 1988, pages 631-633, American Institute of Physics; F. HARTEMANN et al.: "Novel adiabatic bifilar helical wiggler entrance for free-electron laser applications"
- IEEE TRANSACTIONS ON PLASMA SCIENCE, vol. 16, no. 2, avril 1988, pages 162-166, IEEE, New York, US; F.G. YEE et al.: "Efficiency and sideband observations of a raman FEL oscillator with a tapered undulator"

## Description

Dans les lasers à électrons libres, le rayonnement est obtenu par la modulation de l'impulsion d'électrons dans le vide. Les équations de Maxwell nous décrivent le rayonnement émis par une charge électrique qui subit une variation d'impulsion dp due à un champ externe F, généralement en présence de champs électriques et magnétiques. L'amplitude de rayonnement varie en fonction de la variation de l'impulsion dp.

L'amplitude de la radiation électronique émise par une charge électrique en mouvement non uniforme dépend de la masse m de la particule, la variation d'énergie se repartissant entre une variation de masse, une variation de vitesse et un rayonnement.

L'intensité de la radiation est d'autant plus forte que l'accélération ou plus exactement la variation de l'impulsion de la particule est grande (ce qui englobe à la fois les variations de masse et de position). Dans les accélérateurs de particules de géométrie circulaire dans lesquels les particules sont contraintes à suivre des orbites circulaires par des champs magnétiques et par conséquent subissant une variation constante de leur impulsion, la radiation émise par des particules de faible masse (cf électrons, positrons) est particulièrement intense. Cette radiation appelée radiation synchrotron d'après les premières machines accélératrices de particules dans lesquelles le phénomène a été observé, a été longtemps considérée comme un gros inconvénient des accélérateurs circulaires pour électrons.

Les années 1970 ont vu le développement de laboratoires spécialisés qui mettent à profit le rayonnement synchrotron, polychromatique et non cohérent, dans des études de la structure de la matière condensée. La lumière synchrotron est pulsée chaque fois que le faisceau d'électrons passe en face de la fenêtre d'extraction du rayonnement. Cette lumière pulsée, d'impulsions très courtes et bien caractérisées, se prête facilement aux études cinématiques à des échelles de temps allant de la milliseconde à la picoseconde.

Une radiation cohérente en phase et monochromatique, tout comme la radiation émise par un laser classique, peut être obtenue d'une façon générale autour des faisceaux relativistes en faisant subir aux électrons des déviations périodiques perpendiculaires à leur trajet moyen. Ceci est le principe de réalisation du "laser à électrons libres" fonctionnant, toujours dans le domaine relativiste, sur la base de l'effet de contraction du temps, entre un référentiel lié au faisceau et un référentiel fixe, les déviations "vues par le faisceau" étant observables dans le référentiel fixe à une fréquence bien plus élevée.

Le rayonnement d'un laser à électrons libres provient de l'addition des rayonnements émis par chacune des "sources" constituées par les déviations de faisceaux et n'est donc pas homogène dans l'espace entourant les sources, du fait des différences de marche en un point donné des rayonnements provenant des diverses sources. Du fait des relations de phases entre les sources créées par la forme de l'onduleur, le rayonnement d'un laser à électrons libres est cohérent.

Le dispositif qui permet d'obtenir les déviations périodiques des électrons est appelé un "onduleur", car dans sa conception la plus simple, le trajet des électrons est "ondulé" par le dispositif. On peut facilement imaginer les ondes décrites par le trajet des électrons quand ils traversent une région où des champs électriques ou magnétiques alternatifs dévient dans un sens ou dans l'autre les électrons dans une direction perpendiculaire à celle de leur vitesse.

Les champs alternatifs de l'onduleur peuvent être obtenus en alternant des aimants permanents ou en faisant circuler du courant dans des bobinages autour du trajet du faisceau. La géométrie de tels dispositifs autour du faisceau détermine l'interaction avec les électrons de façon à "onduler" leurs trajets et à obtenir l'effet laser.

Il apparaît, d'autre part, que pour des applications industrielles, les onduleurs à aimants permanents offrent de nombreux avantages par rapport aux onduleurs à double hélice, pour lesquels le champ est produit en faisant circuler du courant dans des bobinages hélicoïdaux. En effet, les onduleurs à aimants permanents permettent d'éviter les problèmes de consommation et de dissipation thermique liés aux onduleurs alimentés en courant ; de plus, pour le cas de courtes impulsions, on s'affranchit de la synchronisation entre les alimentations de l'onduleur et le faisceau. Pour les applications continues, l'intérêt des aimants permanents est évident.

Dans les réalisations pratiques d'onduleur, les champs magnétiques sont principalement de deux géométries : soit de polarisation linéaire, perpendiculaire au trajet des électrons soit de polarisation hélicoïdale.

La polarisation hélicoïdale a l'avantage d'éviter le problème de la dérive du faisceau dans un champ magnétique de guidage et possède un degré de symétrie plus élevé ; en particulier la composante longitudinale du champ magnétique est nulle sur l'axe. De plus, cette polarisation focalise le faisceau dans deux dimensions.

Pour obtenir le fonctionnement optimal du laser à électrons libres (LEL), le faisceau d'électrons doit être injecté dans un onduleur à introduction "adiabatique", ce qui veut dire que les champs de l'onduleur montent vers leur valeur maximale de façon progressive à partir du point où les électrons sont introduits.

Le profil adiabatique peut être obtenu de différentes façons : par diffusion magnétique lorsque le champ d'onduleur est produit par une impulsion de courant en changeant le rayon des bobinages hélicoïdaux, ou en shuntant le courant circulant dans l'onduleur. Dans l'art connu les onduleurs à aimants permanents, le profil adiabatique peut être obtenu en écrantant le champ d'onduleur au moyen de pièces métalliques d'épaisseur variable et de perméabilité magnétique élevé. C'est ce que décrit l'article de J. ASHKENAZY et Al publié dans IEEE Journal of Quantum Electronics, volume 24, numéro 5, mai 1988, pages 812-819. Notons que ceci interdit l'utilisation de ce type d'onduleur en conjonction avec un champ extérieur de focalisation car les pièces d'écrantage perturbent à la fois le champ d'onduleur et le champ de guidage, ce dernier étant indispensable pour toute application de puissance à fort courant.

La présente invention permet de remédier à ces inconvénients, tout en permettant d'obtenir un accroissement continu et adiabatique du champ magnétique dans la région d'introduction.

L'invention a pour objet un onduleur hélicoïdal à aimants permanents tel que défini dans la revendication 1.
Les revendications dépendantes 2 à 12 décrivent des modes particuliers de réalisation de cette invention. Le dispositif selon l'invention peut être utilisé comme onduleur, avec profil adiabatique d'introduction pour application aux lasers à électrons libres, ledit onduleur comprenant une région d'introduction avec un profil croissant d'amplitude de champs magnétiques et une région d'interaction dans laquelle l'amplitude du champ de l'onduleur est constante. Selon une réalisation préférée de l'invention, les champs magnétiques desdites régions d'introduction et d'interaction sont produits par des aimants permanents identiques, dont seule l'épaisseur varie selon l'axe de l'onduleur dans la région d'introduction de manière à produire le profil adiabatique requis.

Le dispositif selon l'invention permet ainsi d'acquérir les avantages des onduleurs hélicoïdaux aux aimants permanents tout en évitant les inconvénients de tels dispositifs selon l'art connu, car pour les aimants de perméabilité magnétique voisine de l'unité (tel le cas pour des aimants en Samarium-Cobalt, par exemple), l'utilisation d'un champ de guidage ne pose plus de problème.

L'invention et les avantages apportés par l'utilisation de l'invention seront mieux compris à l'aide de la description détaillée qui est faite à titre d'exemple non limitatif et qui est illustrée par les dessins suivants sur lesquels :
- la figure 1 représente un diagramme schématique du système d'onduleur hélicoïdal à aimants permanents sans region d'introduction de type connu,
- la figure 2 représente un diagramme schématique du système d'onduleur hélicoïdal à aimants permanents avec région d'introduction adiabatique selon l'invention,
- la figure 3 représente le calcul du champ magnétique sur l'axe produit par un dispositif selon la figure 2 : onduleur hélicoïdal à aimants permanents avec région d'introduction adiabatique selon l'invention.
- la figure 4 représente une simulation de la trajectoire d'un électron pénétrant avec une vitesse axiale dans un onduleur de type connu sans introduction adiabatique.
- la figure 5 représente une simulation de la trajectoire d'un électron pénétrant avec une vitesse axiale dans un onduleur selon l'invention avec une variation linéaire de l'induction dans la zone d'introduction,
- la figure 6 représente une simulation de la trajectoire d'un électron pénétrant avec une vitesse axiale dans un onduleur selon l'invention avec une variation de l'induction en Sin² dans la zone d'introduction.

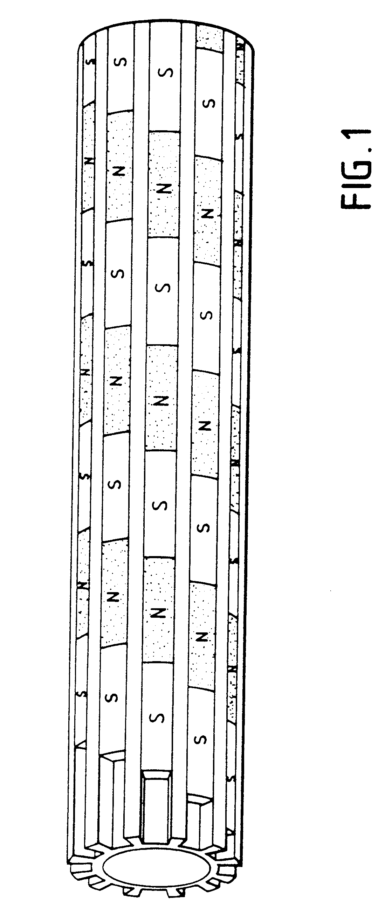

Selon une configuration préférée d'onduleur hélicoïdal à aimants permanents telle que représentée sur la figure 1, des aimants permanents sont fixés dans les cannelures d'un manchon non magnétique, en duralumin, par exemple, de symétrie axiale, de façon à décrire une hélice en spirale autour de l'axe du manchon avec les pôles nord N (ou Sud S).

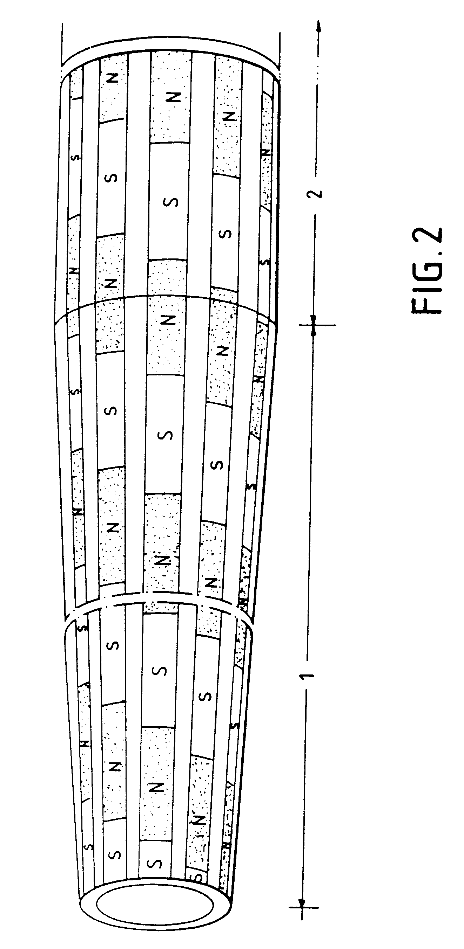

Selon une configuration préférée d'onduleur hélicoïdal à aimants permanents avec introduction adiabatique selon l'invention telle que représentée sur la figure 2, la région d'interaction 2 d'onduleur est identique à celle de la figure 1, et par ailleurs les aimants sont également identiques à ceux de la figure 1 dans la région d'interaction 2, alors que dans la région d'introduction 1 le manchon et les aimants fixés dans les cannelures sont usinés en diamètre décroissant selon l'axe, à partir de la région d'interaction 2, pour décrire une section conique, c'est-à-dire que l'épaisseur des aimants et donc l'amplitude du champ magnétique sur l'axe varient selon l'axe, de façon adiabatique et continu d'une valeur nulle depuis l'introduction, du faisceau dans la région d'introduction jusqu'à sa valeur maximale dans la région d'interaction.

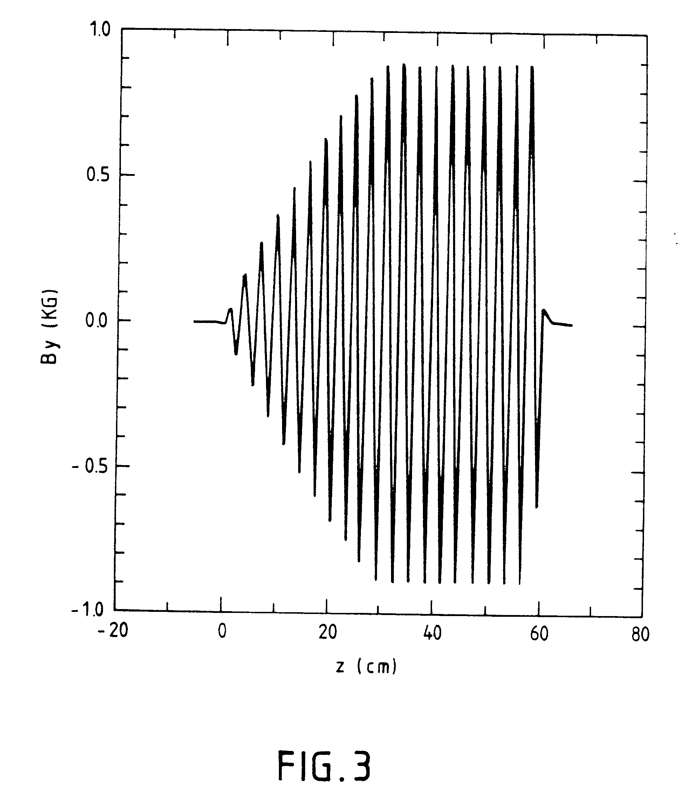

La figure 3 représente l'amplitude du champ magnétique résultant sur l'axe, pour une configuration préférentielle d'onduleur à introduction adiabatique, avec les paramètres de simulation suivants :
- Période:: l_{w} = 30 mm
- Epaisseur maximum :: h = 5 mm
- Largeur :: e = 5 mm
- Distance à l'axe:: R = 13 mm
- Nombre total de périodes :: Nₚ = 20
- Nombre de périodes d'introduction :: Nᵢ = 10
- Type d'introduction :: Linéaire
- Matériau :: Samarium-Cobalt
- Induction de surface :: Bᵣ = 1,07 T
- Induction coercitive :: B* = 4 T

L'effet d'accroissement adiabatique de l'amplitude du champ magnétique de zéro à sa valeur maximale de l'amplitude du champ d'interaction est mise en évidence sur le graphique de ce calcul.

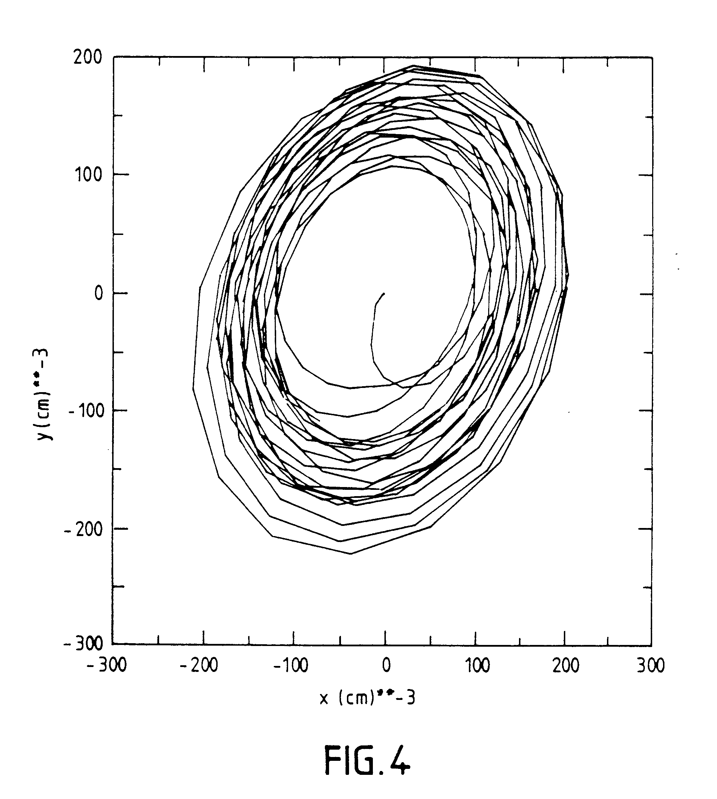

Les figures 4, 5 et 6 représentent les simulations de trajectoires d'électrons en deux dimensions obtenues par projection sur une plane perpendiculaire à l'axe de l'onduleur, pour trois profils d'introduction différents :
- figure 4, pas d'introduction

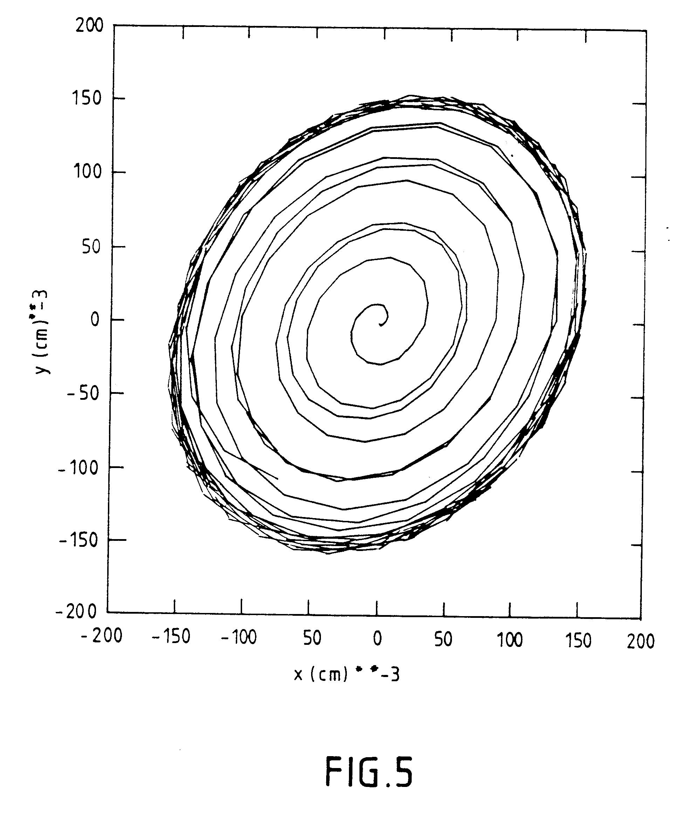

- figure 5, introduction linéaire

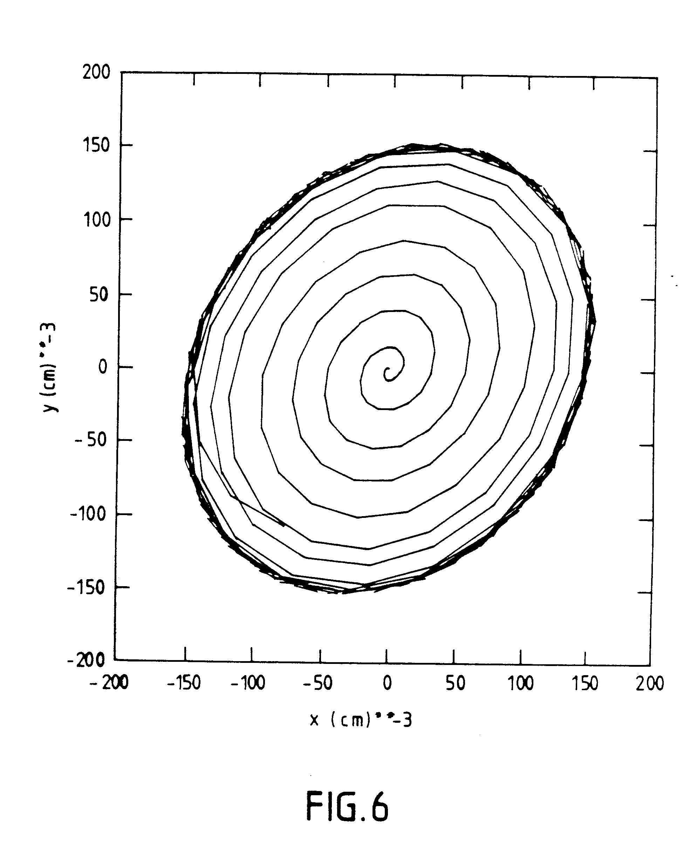

- figure 6, introduction selon Sin².

On constate en comparant les figures 4, 5 et 6 que le faisceau à une tendance à osciller entre un diamètre de 2 à 4 mm pour l'onduleur sans introduction adiabatique représenté sur la figure 4, alors qu'il y a évidence d'un effet de focalisation dans le cas d'introduction linéaire (figure 5) qui ramène le faisceau sur l'axe après un certain nombre d'oscillations et que finalement, la focalisation constatée sur la figure 6 est la plus rapide et la plus propre, dans le cas d'introduction adiabatique en Sin².

Ainsi, on obtient une introduction adiabatique de très bonne qualité en utilisant cette technique.

En particulier, on évite entièrement les problèmes d'alimentation électrique et de dissipation thermique liés aux onduleurs alimentés en courant ; les problèmes de synchronisation pour les onduleurs en impulsions ; tout en réduisant les coûts et en augmentant la fiabilité des onduleurs.

## Revendications

1. Onduleur hélicoïdal à aimants permanents comportant une région d'introduction d'électrons, caractérisé en ce que, dans la région d'introduction, l'épaisseur des aimants varie selon l'axe de l'hélice, de manière à réaliser un champ magnétique hélicoïdal dont l'amplitude varie selon l'axe de l'hélice suivant un profil adiabatique.

2. Onduleur hélicoïdal selon la revendication 1, caractérisé en ce que les aimants sont fixés sur un manchon non magnétique.

3. Onduleur hélicoïdal selon la revendication 2, caractérisé en ce que le manchon comporte des cannelures dans lesquelles sont fixés les aimants.

4. Onduleur hélicoïdal selon l'une des revendications 1 à 3, caractérisé en ce que les aimants permanents sont disposés de manière à ce que leurs pôles de même type décrivent l' hélice.

5. Onduleur hélicoïdal selon l'une des revendications 1 à 4, caractérisé en ce que les aimants permanents sont des paires d'aimants disposés de façon alignée, les centres géométriques des paires d'aimants étant disposés de façon hélicoïdale.

6. Onduleur hélicoïdal selon la revendication 1, caractérisé en ce que la région d'introduction est en forme de cône triangulaire de manière à ce que le profil adiabatique soit linéaire.

7. Onduleur hélicoïdal selon la revendication 1, caractérisé en ce que la région d'introduction est conformée selon une loi en sinus carré suivant l'axe de l'hélice, de manière à ce que le profil adiabatique soit en sinus carré.

8. Onduleur hélicoïdal selon l'une des revendications 1 à 7 caractérisé en ce que l'amplitude du champ magnétique le long de l'axe de l'hélice varie d'une valeur nulle dans la région d'introduction jusqu'à une valeur maximale dans une région d'interaction contiguë à la région d'introduction.

9. Onduleur hélicoïdal selon l'une des revendications 1 à 8, caractérisé en ce que les aimants permanents ont un cycle triangulaire.

10. Onduleur hélicoïdal sleon l'une des revendications 1 à 9, caractérisé en ce que les aimants permanents ont une perméabilité magnétique voisine de un.

11. Onduleur hélicoïdal selon l'une des revendications 1 à 10, caractérisé en ce que les aimants permanents sont en samarium-cobalt.

12. Onduleur hélicoïdal selon l'une des revendications 2 à 11, caractérisé en ce que le manchon est en duralumin.

## Claims

1. Permanent magnet helical wiggler comprising an electron input region, characterised in that, in the input region, the thickness of the magnets varies along the axis of the helix, so as to produce a helical magnetic field whose amplitude varies along the axis of the helix with an adiabatic profile.

2. Helical wiggler according to Claim 1, characterised in that the magnets are fixed to a non-magnetic sleeve.

3. Helical wiggler according to Claim 2, characterised in that the sleeve comprises ribs in which the magnets are fixed.

4. Helical wiggler according to one of Claims 1 to 3, characterised in that the permanent magnets are arranged so that their like poles describe the helix.

5. Helical wiggler according to one of Claims 1 to 4, characterised in that the permanent magnets are pairs of magnets arranged in an aligned manner, the geometrical centres of the pairs of magnets being arranged helically.

6. Helical wiggler according to Claim 1, characterised in that the input region is in the shape of a triangular cone, so that the adiabatic profile is linear.

7. Helical wiggler according to Claim 1, characterised in that the input region is shaped according to a sine-squared law along the axis of the helix so that the adiabatic profile is a sine-squared curve.

8. Helical wiggler according to one of Claims 1 to 7, characterised in that the amplitude of the magnetic field along the axis of the helix varies from a zero value in the input region up to a maximum value in an interaction region contiguous with the input region.

9. Helical wiggler according to one of Claims 1 to 8, characterised in that the permanent magnets have a triangular cycle.

10. Helical wiggler according to one of Claims 1 to 9, characterised in that the permanent magnets have a magnetic permeability close to one.

11. Helical wiggler according to one of Claims 1 to 10, characterised in that the permanent magnets are made of samarium-cobalt.

12. Helical wiggler according to one of Claims 2 to 11, characterised in that the sleeve is made of duralumin.

## Patentansprüche

1. Mit Permanentmagneten versehener schraubenförmiger Wiggler mit einer Zone zum Einleiten von Elektronen, dadurch gekennzeichnet, daß sich die Dicke der Magneten in der Einleitungszone längs der Schraubenachse so ändert, daß ein schraubenförmiges Magnetfeld entsteht, dessen Amplitude sich längs der Achse der Schraube entsprechend einem adiabatischen Profil ändert.

2. Schraubenförmiger Wiggler nach Anspruch 1, dadurch gekennzeichnet, daß die Magnete auf einer nicht magnetischen Hülse befestigt sind.

3. Schraubenförmiger Wiggler nach Anspruch 2, dadurch gekennzeichnet, daß die Hülse Nuten aufweist, in der die Magnete befestigt sind.

4. Schraubenförmiger Wiggler nach einem der Ansprüche 1 bis 3, dadurch gekennzeichnet, daß die Permanentmagnete so angeordnet sind, daß ihre Pole gleichen Typs die Schraube beschreiben.

5. Schraubenförmiger Wiggler nach einem der Ansprüche 1 bis 4, dadurch gekennzeichnet, daß die Permanentmagnete Magnetpaare sind, die in einer Linie in bezug zueinander angeordnet sind, wobei die geometrischen Mitten der Magnetpaare schraubenförmig angeordnet sind.

6. Schraubenförmiger Wiggler nach Anspruch 1, dadurch gekennzeichnet, daß die Einleitungszone die Form eines Dreieckkonus hat, so daß das adiabatische Profil linear ist.

7. Schraubenförmiger Wiggler nach Anspruch 1, dadurch gekennzeichnet, daß die Einleitungszone längs der Achse der Schraube gemäß einer quadratischen Sinusfunktion verläuft, so daß das adiabatische Profil einem quadratischen Sinus entspricht.

8. Schraubenförmiger Wiggler nach einem der Ansprüche 1 bis 7, dadurch gekennzeichnet, daß die Amplitude des Magnetfeldes längs der Schraube sich von einem Wert Null in der Einleitungszone bis zu einem Maximalwert in einer Wechselwirkungszone ändert, die an die Einleitungszone angrenzt.

9. Schraubenförmiger Wiggler nach einem der Ansprüche 1 bis 8, dadurch gekennzeichnet, daß die Permanentmagnete einen Dreieckzyklus haben.

10. Schraubenförmiger Wiggler nach einem der Ansprüche 1 bis 9, dadurch gekennzeichnet, daß die Permanentmagnete eine magnetische Permeabilität nahe 1 haben.

11. Schraubenförmiger Wiggler nach einem der Ansprüche 1 bis 10, dadurch gekennzeichnet, daß die Permanentmagnete aus Samarium-Kobalt bestehen.

12. Schraubenförmiger Wiggler nach einem der Ansprüche 2 bis 11, dadurch gekennzeichnet, daß die Hülse aus Duralumin besteht.
